# EUROPÄISCHE PATENTSCHRIFT

(11) **EP 2 029 405 B1**
(45) Veröffentlichungstag und Bekanntmachung des Hinweises auf die Patenterteilung: **03.03.2010**
(21) Anmeldenummer: 07725702.0
(22) Anmeldetag: 31.05.2007
(51) Int. Cl.: B60T 8/18

(54) **LASTBREMSVENTIL FÜR SCHIENENFAHRZEUGE MIT PROGRESSIVER FEDERKENNLINIE**
LOAD-CONTROLLED BRAKE VALVE FOR RAILWAY VEHICLES, FEATURING A PROGRESSIVE LOAD DEFORMATION CURVE
SOUPAPE DE COMMANDE DE FREIN À RÉGULATION EN FONCTION DE LA CHARGE POUR DES VÉHICULES ROULANT SUR DES RAILS COMPRENANT UNE COURBE CARACTÉRISTIQUE DES RESSORTS PROGRESSIVE

(30) Priorität: 31.05.2006 DE 102006025329
(43) Veröffentlichungstag der Anmeldung: 04.03.2009
(73) Patentinhaber: KNORR-BREMSE Systeme für Schienenfahrzeuge GmbH, 80809 München (DE)
(72) Erfinder: SIMON, Timm, 80636 München (DE); SIERLA, Wolfgang, 86669 Königsmoos (DE); SONNTAG, Stefan, D-82024 Taufkirchen (DE); HELLER, Martin, 85716 Unterschleissheim (DE)
(74) Vertreter: Mattusch, Gundula
(86) Internationale Anmeldenummer: PCT/EP2007/004817
(87) Internationale Veröffentlichungsnummer: WO 2007/137845

(56) Entgegenhaltungen:
- DE-C- 702 771
- DE-C1- 10 144 300
- DE-U- 6 609 868

## Beschreibung

### Stand der Technik

Die Erfindung geht aus von einem Lastbremsventil zur Lastabbremsung eines Schienenfahrzeugs, mit einem ersten Kolben mit einer ersten Kolbenstange, auf den ein Bremsdruck wirkt und einem oder mehreren zweiten Kolben mit einer zweiten Kolbenstange, auf die ein oder mehrere Vorsteuerdrücke wirken, wobei die Kolbenstangen mit einem Wiegebalken zusammenwirken, der ein Einlassventil und ein Auslassventil betätigt, wobei das Einlassventil einen Druckluftvorrat mit einem Bremszylinder verbindet oder diese Verbindung sperrt und das Auslassventil den Bremszylinder mit der Atmosphäre verbindet oder diese Verbindung sperrt und wobei der Wiegebalken mit einer Abstützung in Kontakt bringbar ist, deren Lage in Bezug zum Wiegebalken durch einen dritten Kolben veränderbar ist, wobei der dritte Kolben einerseits durch einen lastabhängigen Druck und andererseits durch die Federkraft einer Druckfeder belastet ist, gemäß dem Oberbegriff von Anspruch 1.

Ein gattungsgemäßes Lastbremsventil ist beispielsweise aus der aus der DE 702 771 C oder aus der Firmenschrift Knorr-Bremse Systeme für Schienenfahrzeuge: Gerätebeschreibung "Regelbares Lastbremsventil RLV-11d" bekannt.

In der DE 101 44 300 C1 wird ein Lastbremsventil für Fahrzeuge beschrieben, welches durch eine mit einem Kolben zusammen wirkende Membrane eine variable Wirkfläche für den einwirkenden Druck bereitstellt.

Gemäß DE 66 09 868 U wird eine Bremseinrichtung für Schienenfahrzeuge beschrieben, mit einem durch Druckmittelbeaufschlagung eines Kolbens entgegen einer Speicherfeder in eine Lösestellung bringbaren Federspeicherbremszylinder, wobei die vom Federspeicherbremszylinder aufgebrachte Bremskraft lastabhängig angepasst wird.

Lastabbremsung bedeutet Anpassung der Bremskraft an das Fahrzeuggewicht, entsprechend seines Beladungszustands. Sie ermöglicht über den ganzen Lastbereich beziehungsweise einen großen Teil davon eine proportional zum Fahrzeuggewicht ansteigende Bremsleistung und somit annähernd konstante Bremsgewichtshundertstel.

Die Veränderung der Bremskraft erfolgt pneumatisch durch kontinuierliche Anpassung des Bremszylinderhöchstdrucks nach Maßgabe des Wagengewichtes. Bei Güterwagen liegt der Bremsdruck beispielsweise im Bereich von 0,6 bis 3,8 10⁵ Pa. Bei Reisezugwagen, Triebwagen und Nahverkehrsfahrzeugen mit Scheibenbremsen genügt ein engerer Bereich.

Die Regelung der Bremskraft erfolgt durch einen lastproportionalen Steuerdruck T. Zur Bildung dieses Steuerdrucks T gibt es verschiedene Möglichkeiten:
- Umsetzung der Fahrzeugeinfederung durch ein Einstellventil,
- Umsetzung eines anteiligen Fahrzeuggewichts durch ein Wiegeventil,
- Heranziehung des Balgdruckes bei Luftfederung.

Nach Maßgabe des lastproportionalen Steuerdruckes T und eines pneumatischen Vorsteuerdrucks Cᵥ wird im regelbaren Lastbremsventil folglich ein lastabhängiger Bremsdruck C für wenigstens einen nachgeordneten Bremszylinder gebildet.

Die Kennlinien bekannter Lastbremsventile, d.h. die Abhängigkeit des Bremsdrucks C vom lastproportionalen Steuerdruck T ist nichtlinear, insbesondere bei hoher Last, wenn die Hebelarme am Wiegebalken sehr unterschiedlich sind. Insbesondere ist dann der dem ersten, unter Bremsdruck C stehenden Kolben zugeordnete Hebelarm sehr kurz gegenüber dem dem zweiten, unter Vorsteuerdruck Cᵥ stehenden Kolben zugeordnete Hebelarm, was für die Nichtlinearität der Kennlinie verantwortlich ist.

Diese Nichtlinearität ist jedoch von Nachteil, da die Vorschriften eine gleich bleibende Abbremsung über der Wagenmasse verlangen, wozu die Kennlinie linear sein müsste. Bekannt sind Getriebe, welche die Nichtlinearität ausgleichen. Diese Getriebe stellen jedoch einen zusätzlichen Aufwand für die Fertigung, Montage, Justierung und Instandhaltung dar.

Der vorliegenden Erfindung liegt die Aufgabe zugrunde, ein Lastbremsventil der einganges erwähnten Art derart weiter zu entwickeln, dass es eine lineare Kennlinie aufweist, ohne dass hierzu zusätzliche Einrichtungen notwendig sind.

Diese Aufgabe wird erfindungsgemäß durch die Merkmale von Anspruch 1 gelöst.

### Vorteile der Erfindung

Die Erfindung beruht auf dem Gedanken, dass die auf den dritten Kolben wirkende Druckfeder eine progressive Federkennlinie aufweist, wobei unter einer progressiven Federkennlinie eine Kennlinie zu verstehen ist, bei welcher die Feder mit zunehmendem Federweg f härter wird und also dF/df zunimmt. Die Druckfeder wirkt am die Abstützung des Wiegebalkens verschiebenden dritten Kolben gegen die Druckkraft, welcher vom lastproportionalen Steuerdruck T ausgeübt wird. Eine progressive Federkennlinie der Druckfeder wirkt folglich bei höherem lastproportionalen Steuerdruck T, also bei hoher Last, der Tendenz entgegen, die Abstützung des Wiegebalkens zu weit in eine Richtung zu verschieben, in welcher die Längen der Hebelarme extrem unterschiedlich sind. Durch Anpassung der progressiven Federkennlinie an die jeweils vorliegenden Randbedingungen durch den Fachmann kann dieser die Nichtlinearität des Lastbremsventils kompensieren. Im Ergebnis ist daher eine lineare Kennlinie des Lastbremsventil, d.h. ein linearer Verlauf des Bremsdrucks C in Abhängigkeit vom lastproportionalen Steuerdruck T lediglich durch die erfindungsgemäße Verwendung einer Druckfeder mit progressiver Kennlinie für den dritten Kolben erzielbar, ohne dass das Lastbremsventil durch weitere Bauteile oder Baugruppen ergänzt werden müsste, weil eine solche Druckfeder bei einem Lastbremsventil ohnehin erforderlich ist. Dies stellt aufgrund der Einfachheit der Maßnahme im Hinblick auf die Fertigungs- und Montagekosten einen wesentlichen Vorteil dar.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine schematische Darstellung des Aufbaus eines Lastbremsventils gemäß einer bevorzugten Ausführungsform der Erfindung bei druckloser Bremse;
- Fig.2: das Lastbremsventil von Fig.1 bei gelöster Bremse;
- Fig.3: das Lastbremsventil von Fig.1 beim Ansprung;
- Fig.4: das Lastbremsventil von Fig.1 beim Bremsen;
- Fig.5: das Lastbremsventil von Fig.1 in Abschlussstellung;
- Fig.6: das Lastbremsventil von Fig.1 beim Lösen der Bremse.

### Beschreibung des Ausführungsbeispiels

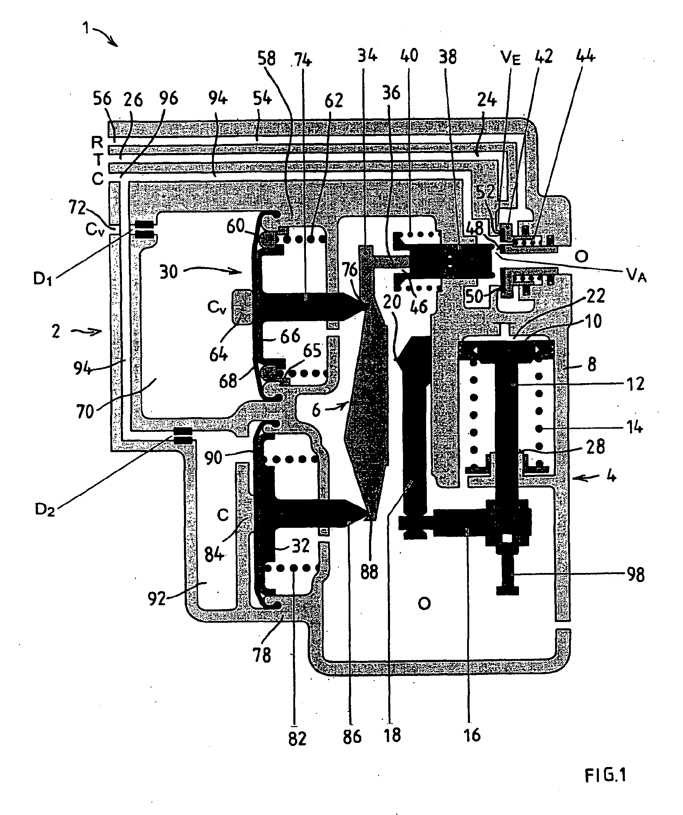

In Fig.1 ist mit der Bezugszahl 1 ein regelbares Lastbremsventil als Bestandteil einer automatischen druckluftbetätigten lastabhängigen Bremse eines Schienenfahrzeugs gemäß einer bevorzugten Ausführungsform dargestellt, welche beispielsweise mit einer Ansprungeinrichtung 2 ausgestattet ist. Das regelbare Lastbremsventil 1 gemäß Fig. 1 besteht im wesentlichen aus einer Steuereinrichtung 4, einer Abwiegeeinrichtung 6, einem Einlassventil V_{E}, einem Auslassventil V_{A} und der Ansprungeinrichtung 2.

Die Steuereinrichtung 4 bestimmt abhängig von der momentanen Fahrzeuglast das Übersetzungsverhältnis eines Vorsteuerdrucks Cᵥ zu einem Bremsdruck C in einem oder mehreren Bremszylindern des Schienenfahrzeugs. Die Steuereinrichtung 4 beinhaltet hierzu einen in einem Zylinder 8 linear geführten Steuerkolben 10 mit Steuerkolbenstange 12, eine sich am Zylinderboden abstützende und auf den Steuerkolben 10 wirkende Druckfeder 14, eine mit der Steuerkolbenstange 12 zusammen wirkende Stellmechanik 16 und einen vom Steuerkolben 10 in Steuerkolbenstellrichtung betätigten Verstellstein 18, welcher eine Abstützung in Form einer Schneide 20 trägt. Eine vom Steuerkolben 10 begrenzte Steuerkammer 22 des Zylinders 8 steht über einen Strömungskanal 24 mit einem Anschluss 26 des Lastbremsventils 1 in Strömungsverbindung, in welchen ein lastabhängiger Steuerdruck T eingespeist wird, der von einer hier nicht gezeigten Wiegevorrichtung des Fahrzeugs erzeugt wird. Folglich betätigt der lastabhängige Steuerdruck T, dessen Höhe proportional zur Fahrzeuglast ist, den Steuerkolben 10 gegen die Kraft der Druckfeder 14. Die den Steuerkolben 10 belastende Druckfeder 14 weist eine progressive Federkennlinie auf, d.h. die Druckfeder 14 wird mit steigendem Federweg oder mit steigender Verschiebung des Steuerkolbens 10 gegen die Wirkung der Druckfeder 14 härter.

Der lineare Kolbenweg des Steuerkolbens 10 wird über die Stellmechanik 16 auf den Verstellstein 18 übertragen. Dieser und damit seine als Drehpunkt für die Abwiegeeinrichtung 6 dienende Schneide 20 nimmt dann eine der Last entsprechende Stellung ein. Bei Vollast, d.h. bei maximal möglicher Last macht der Steuerkolben 10 den maximalen Kolbenweg und befindet in Kontakt mit einem unteren Anschlag 28 im Zylinder 8. Dadurch bleibt bei weiterem Anstieg des lastproportionalen Steuerdrucks T der Bremszylinderdruck C unverändert. Weiterhin wird die Steuereinrichtung 4 bei Schwankungen des lastproportionalen Steuerdrucks T, beispielsweise hervorgerufen durch Schwingungen und Kurvenfahrten, in eingebremstem Zustand oder beim Einbremsen nicht beeinflusst.

Die Abwiegeeinrichtung 6 beinhaltet einen Vorsteuerdruckkolbensatz 30, einen Bremsdruckkolben 32 und einen Wiegebalken 34 und bestimmt entsprechend der Höhe des Vorsteuerdrucks Cᵥ und der durch die Stellung des Verstellsteins 18 bestimmten Hebelarmverhältnisse am Wiegebalken 34 die Höhe des ausgesteuerten Bremszylinderdrucks C. Der Bremszylinderdruck C ist somit eine Funktion des Vorsteuerdrucks Cᵥ und des lastabhängigen Bremsdrucks T.

Das Einventil V_{E} und das Auslassventil V_{A} werden durch die Abwiegeeinrichtung 6, beispielsweise mittels eines am Wiegebalken 34 endseitig angeordneten Druckstücks 36 betätigt und sind als entlastetes Doppelsitzventil ausgebildet, welches einen Ventilstößel 38, eine Druckfeder 40, einen Ventilteller 42 und eine weitere Druckfeder 44 beinhaltet. Im einzelnen weist der Ventilstößel 38 an seinem dem Wiegebalken 34 zugeordneten Ende eine Ausnehmung 46 zum Eingriff des Druckstücks 36 des Wiegebalkens 34 auf, während sein anderes Ende mit einem ersten, beispielsweise inneren Ventilsitz 48 zusammenwirkt, der am Ventilteller 42 ausgebildet ist und zusammen mit der Druckfeder 44 das Auslassventil V_{A} bildet. Der Ventilstößel 38 ist durch die Druckfeder 40 in einer ihn vom ersten, inneren Ventilsitz 48 abhebenden Richtung belastet.

Weiterhin ist an dem Ventilteller 42 ein zweiter, beispielsweise äußerer Ventilsitz 50 vorhanden, der mit einem ringförmig vorspringenden Rand 52 einer Mündung eines Strömungskanals 54 zusammenwirkt, dessen anderes Ende einen Anschluss 56 für einen Vorratsdruck R ausbildet. Der Ventilteller 42 ist durch die weitere Druckfeder 44 in einer ihn gegen den Rand 52 der Mündung drängenden Richtung vorgespannt. Der Rand 52 der Mündung des Strömungskanals 54, der zweite, äußere Ventilsitz 50 und die weitere Druckfeder 44 sind Bestandteile des Einlassventils V_{E}.

Das Doppelsitzventil V_{E}, V_{A} funktioniert dabei wie folgt: Bei geschlossenem Einlassventil V_{E} und geöffnetem Auslassventil V_{A} ist oder wird der Bremszylinder entlüftet, d.h. der Bremsdruck C fällt. Bei geöffnetem Einlassventil V_{E} und geschlossenem Auslassventil V_{A} wird der Bremszylinder mit Druckluft aus dem Vorratsluftbehälter R belüftet oder nachgespeist. Wenn das Einlassventil V_{E} und das Auslassventil V_{A} geschlossen sind, befindet sich das Lastbremsventil 1 in Abschlussstellung, in welcher ein definierter Bremszylinderdruck C in den Bremszylinder eingesteuert worden ist.

Die Ansprungeinrichtung 2 ermöglicht einen schnellen lastunabhängigen Aufbau des Bremszylinderdrucks C bei einer ersten Bremsstufe. Insbesondere bei niedriger Last, also bei geringen Bremszylinderdrücken C wird dadurch ein sicheres Anlegen der Bremsklötze erzielt.

Die Ansprungeinrichtung 2 beinhaltet den vorzugsweise mehrteiligen, in einem Zylinder 58 linear verschieblich gehaltenen Vorsteuerdruckkolbensatz 30, bei welchem ein äußerer Vorsteuerdruckkolben 60 durch eine Druckfeder 62 gegen einen Anschlag 65 gedrängt ist. Der äußere Vorsteuerdruckkolben 60 kann einen inneren Vorsteuerdruckkolben 66 beispielsweise über einen Kragen gegen die Wirkung der Druckfeder 62 mitnehmen. Der Vorsteuerdruckkolbensatz 30 wird von einer Membrane 68 betätigt, welche gegen einen Anschlag 64 anschlagbar ist und welche einen Vorsteuerdruckraum 70 des Lastbremsventils 1 begrenzt, welcher über eine Drossel D1 mit einem Anschluss 72 für den Vorsteuerdruck Cᵥ in Strömungsverbindung steht. Die vom Vorsteuerdruckraum 70 abgewandte Seite des Vorsteuerdruckkolbensatzes 30 steht indessen mit der Atmosphäre in Verbindung und unter Umgebungsdruck 0. Der innere, nicht federbelastete Vorsteuerdruckkolben 66 weist eine Vorsteuerdruckkolbenstange 74 auf, welche endseitig mit dem Ende des Wiegebalkens 34 durch ein Gelenk 76 in schwenkbarer Verbindung steht, von welchem auch das Druckstück 36 wegragt.

Weiterhin ist in einem weiteren Zylinder 78 der Bremsdruckkolben 32 linear geführt, der durch eine Druckfeder 82 gegen einen weiteren Anschlag 84 gespannt ist und eine Bremsdruckkolbenstange 86 aufweist, welche an dem anderen Ende des Wiegebalkens 34 vorzugsweise durch ein Gelenk 88 gelagert ist. Der Bremsdruckkolben 32 wird wiederum durch eine Membrane 90 betätigt, die einen Bremsdruckraum 92 begrenzt, der über einen Strömungskanal 94 mit integrierter Drossel D₂ mit einem Anschluss 96 für den Bremsdruck C in Verbindung steht. Die vom Bremsdruckraum 92 abgewandte Seite des Bremsdruckkolbens 32 ist indessen mit Umgebungsdruck 0 belastet.

Vor diesem Hintergrund ist die Funktionsweise des Lastbremsventils 1 wie folgt: Bei druckloser Bremse (Fig.1) sind der Vorsteuerdruckraum 70 und der Bremsdruckraum 92 sowie die Steuerkammer 22 entlüftet bzw. drucklos, wodurch der Bremsdruckkolben, 32 und der Vorsteuerdruckkolbensatz 30 durch die Druckfedern 62, 82 gegen ihre zugeordneten Anschläge 64, 65, 84 gespannt sind. Da der Wiegebalken 34 mit der Vorsteuerdruckkolbenstange 74 und der Bremsdruckkolbenstange 86 gelenkig gekoppelt ist, ist er von der Schneide 20 des Verstellsteins 18 abgehoben und das Lastbremsventil 1 befindet sich in Ausgangsstellung. Das Auslassventil V_{A} ist durch die Wirkung der Druckfeder 40 geöffnet, dadurch ist der Anschluss 96 für den Bremsdruck C mit der Atmosphäre O verbunden, was den daran angeschlossenen Bremszylinder entlüftet. Das Einlassventil V_{E} ist durch die Wirkung der Druckfeder 44 geschlossen und damit ist die Verbindung zwischen dem unter Vorratsdruck R stehenden Vorratsluftbehälter und dem Bremszylinder gesperrt.

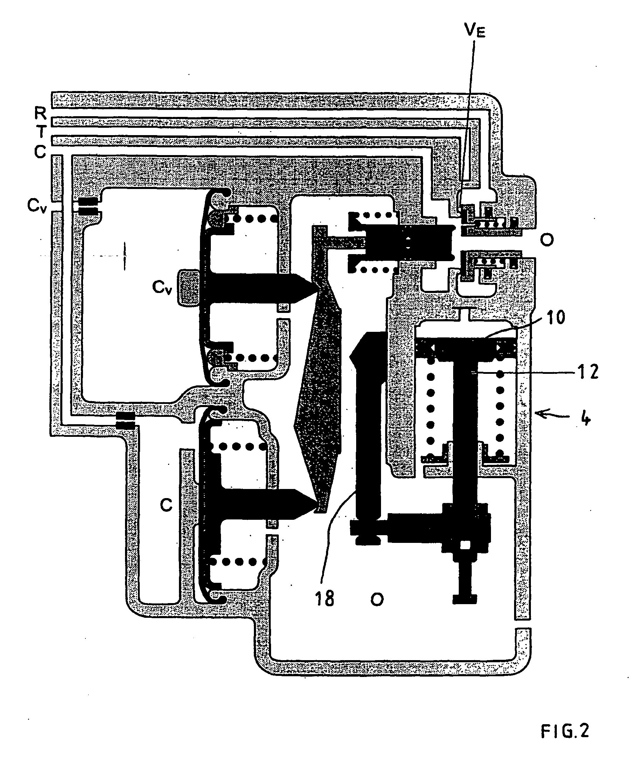

Bei gelöster Bremse (Fig.2) steht Vorratsdruck R aus dem Vorratsluftbehälter am Einlassventil V_{E} und lastabhängiger Steuerdruck T am Steuerkolben 10 an. Alle Funktionsteile befinden sich in der Ausgangsstellung von Fig.1 mit Ausnahme der Steuereinrichtung 4, von welcher der Steuerkolben 10 und damit der Verstellstein 18 eine Stellung einnehmen, die proportional zum Fahrzeuggewicht ist.

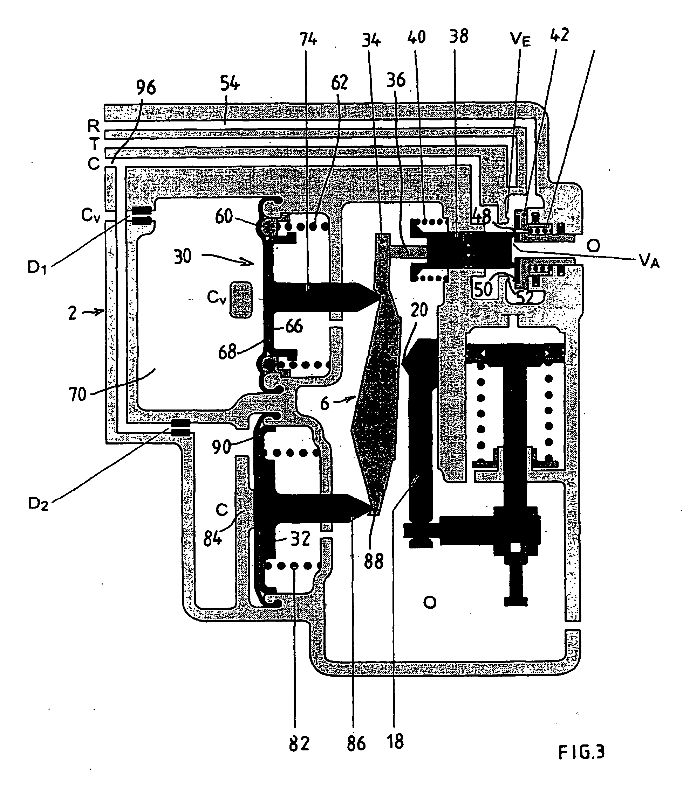

Beim Einleiten eines Bremsvorgangs oder Ansprungs (Fig.3) muss der eingesteuerte Bremszylinderdruck C zunächst die Reibung der bewegten Teile, die Kraft der Bremskolbenfeder und die Trägheit des Bremsgestänges überwinden, um die Bremsklötze anlegen und eine Klotzkraft erzeugen, die es ermöglicht, den gewünschte Bremskraft zu erzielen.

Die Ansprungeinrichtung 2 bewirkt insbesondere bei niedriger Last und geringer Bremsstufe einen schnellen Bremsdruckaufbau im Bremszylinder. Der Vorsteuerdruck C_{V} strömt dann über die Drossel D1 in den Vorsteuerdruckraum 70 und wirkt auf die Membrane 68 und damit auf den Vorsteuerdruckkolbensatz 30. Der innere Vorsteuerdruckkolben 66 bewegt dann über die Vorsteuerdruckkolbenstange 74, den Wiegebalken 34 und das Druckstück 36 den Ventilstößel 38 gegen die Kraft der Druckfeder 40. Dabei dreht sich der Wiegebalken 34 und hat als Drehpunkt das Gelenk 88 der Bremsdruckkolbenstange 86 mit dem Wiegebalken 34. Hierdurch wird der Ventilstößel 38 gegen den Ventilteller 42 und insbesondere gegen den inneren Ventilsitz 48 gespannt, wodurch das Auslassventil V_{A} gegen die Kraft der Druckfeder 40 geschlossen wird. Weiterhin hebt der äußere Ventilsitz 50 des Ventiltellers 42 vom Rand 52 der Mündung des den Vorratsdruck R führenden Strömungskanals 54 ab, wodurch das Einlassventil V_{E} geöffnet wird. Nun strömt Druckluft aus dem Vorratsluftbehälter schnell zum Anschluss 96 für den Bremsdruck C und von dort in den Bremszylinder, während sie durch die Drossel D₂ verzögert auch auf die Membrane 90 des Bremsdruckkolbens 32 wirkt.

Das Öffnen des Einlassventils V_{E} erfolgt am Anfang lastunabhängig, da die Abwiegeeinrichtung 6 noch nicht wirksam ist. Eine Rücksteuerung des Ventilstößels 38 ist jedoch erst dann möglich, wenn die Druckkraft am Bremsdruckkolben 32 einen Wert erreicht, welcher die Kraft der Druckfeder 82 zu überwinden vermag. Denn erst dann wird der Bremsdruckkolben 32 zusammen mit der Bremsdruckkolbenstange 86 vom Anschlag 84 weg in Richtung Verstellstein 18 verschoben, bis der Wiegebalken 34 die Schneide 20 des Verstellsteins 18 kontaktiert und die Abwiegeeinrichtung 6 dadurch in Kraft tritt. Durch die zeitliche Verzögerung der Rücksteuerung des Ventilstößels 38 wird der geforderte rasche Druckanstieg im Bremszylinder ermöglicht.

Gemäß der Bedingung UIC, Blatt 540/I/18 soll der Ansprung als prozentualer Wert der am Ende eines raschen Bremszylinderdruckanstiegs erzeugten Klotzkraft im Verhältnis zu der durch den maximalen Bremsdruck C erzeugten Klotzkraft etwa 10 % betragen. Das dazu notwendige Kräfteverhältnis an der Abwiegeeinrichtung 6 unterscheidet sich von demjenigen, welches für den weiteren Bremszylinderdruckanstieg erforderlich ist. Aus diesem Grund ist der Vorsteuerdruckkolbensatz 30 mehrteilig ausgebildet und besitzt getrennte Wirkungsflächen des inneren Vorsteuerdruckkolbens 66 und des äußeren Vorsteuerdruckkolbens 60. In der Ansprungphase wirkt der Vorsteuerdruck C_{V} lediglich auf den inneren Vorsteuerdruckkolben 66, da dieser nicht durch die Druckfeder 62 in Gegenrichtung vorbelastet ist.

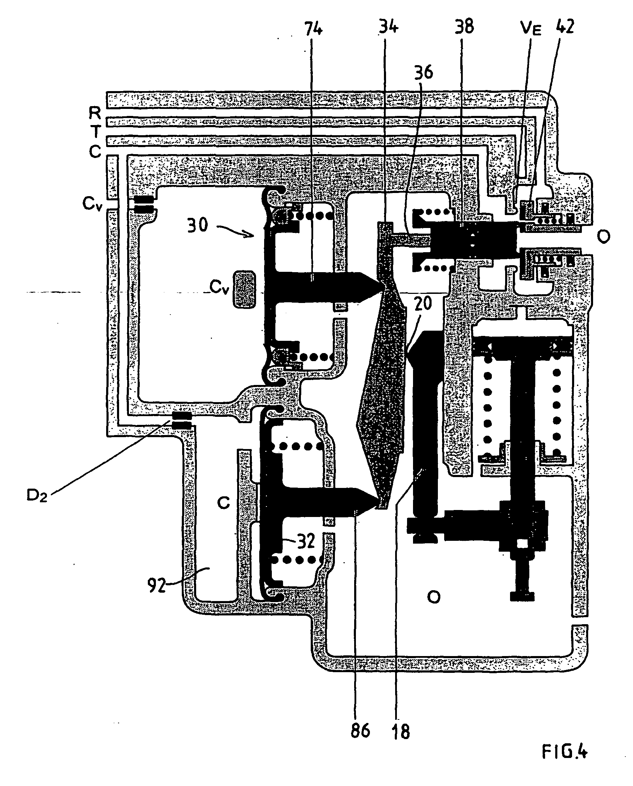

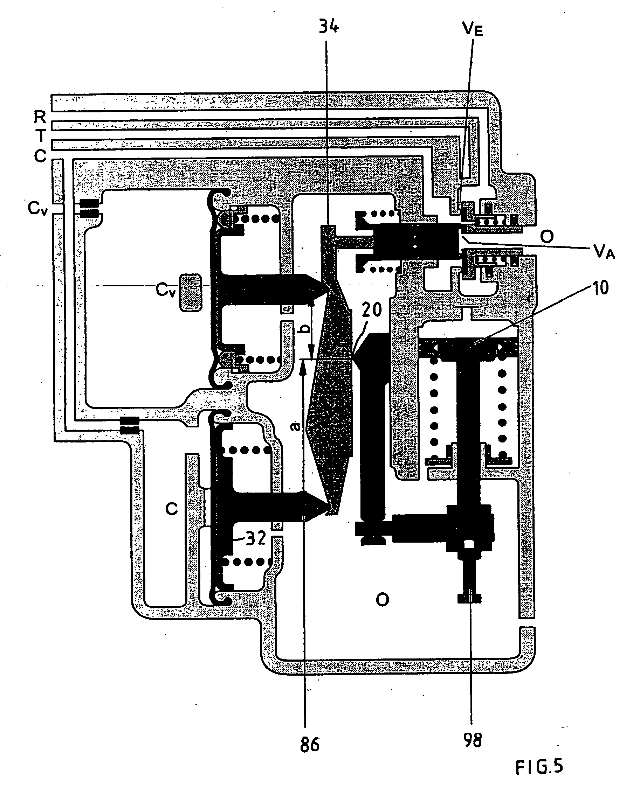

Bei jedem Bremsvorgang nach einer bereits eingeleiteten Bremsstufe erfolgt ein ähnlicher Vorgang wie beim Ansprung, mit dem einzigen Unterschied, dass jetzt die Abwiegeeinrichtung 6 schon wirksam ist und sich das Einlassventil V_{E} in Abschlussstellung (Fig.5) befindet. Der Druckanstieg des Vorsteuerdrucks C_{V} bewirkt nun eine Betätigung des gesamten Vorsteuerdruckkolbensatzes 30 einschließlich des äußeren Vorsteuerdruckkolbens 60, wie in Fig. 4 gezeigt ist. Der Wiegebalken 34 dreht sich um die als Drehpunkt dienende Schneide 20 am Verstellstein 18 gegen die Wirkung des Bremsdrucks C am Bremsdruckkolben 32. Der Bremsdruck C entspricht noch dem der vorhergegangenen Bremsstufe. Der Wiegebalken 34 betätigt dann über das Druckstück 36 den Ventilstößel 38 und damit auch den Ventilteller 42 und öffnet damit das Einlassventil V_{E}. Druckluft unter Vorratsdruck R strömt aus dem Vorratsluftbehälter erneut in den Bremszylinder und über die Drossel D₂ in den Bremsdruckraum 92, um den Bremsdruckkolben 32 zu belasten, wodurch sich der Bremsdruck C erhöht.

Nach jedem abgeschlossenen Bremsvorgang geht das Einlassventil V_{E} in die in Fig.5 gezeigte Abschlussstellung. Der in den Bremszylinder strömende Bremsdruck C baut sich wie schon beschrieben auch am Bremsdruckkolben 32 verzögert auf. Wenn der vorgewählte Anstieg des Vorsteuerdrucks C_{V} abgeschlossen ist, erreicht der Bremsdruck C gleichzeitig einen Wert, der den Wiegebalken 34 in einer Gleichgewichtsstellung hält, die der Abschlussstellung von Fig.5 entspricht. Das Einlassventil V_{E} und das Auslassventil V_{A} sind dabei geschlossen.

Der eingesteuerte Bremszylinderdruck C ist folglich abhängig von der Höhe des Vorsteuerdrucks C_{V} und der Länge der Hebelarme a und b am Wiegebalken 34, die gleichzeitig von der Höhe des lastabhängigen Steuerdrucks T bestimmt werden. Mit steigendem lastabhängigen Steuerdrucks T, also mit steigendem Fahrzeuggewicht verkleinert sich der Hebelarm a und vergrößert sich der Hebelarm b. Dadurch wird ein höherer Bremsdruck C notwendig, um ein Drehmoment zu erzeugen, welches den Wiegebalken 34 in die Gleichgewichtsstellung bzw. Abschlussstellung zurückdreht. Durch eine Einstellschraube 98 wird der maximale Hub des Steuerkolbens 10 begrenzt. Damit lässt sich ein maximaler Bremsdruck C einstellen.

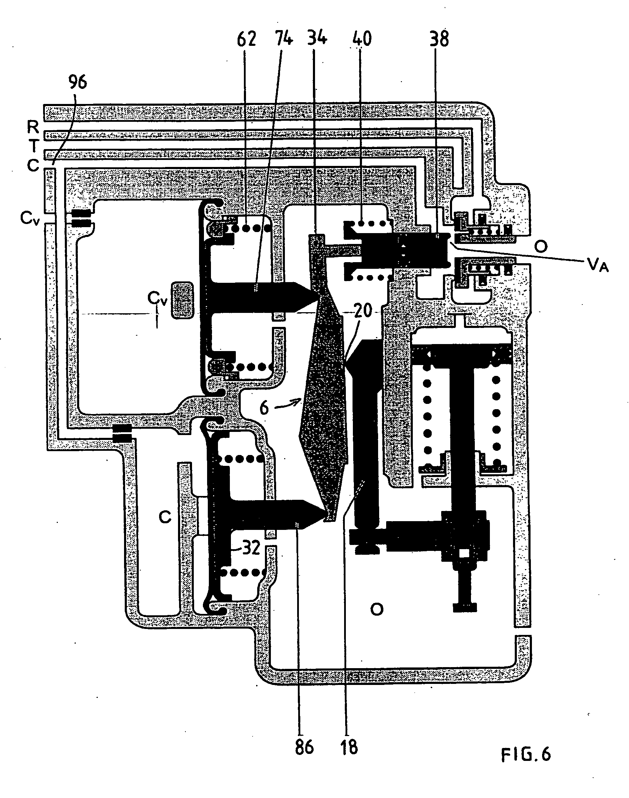

Der Lösevorgang wird durch die Verminderung des Vorsteuerdrucks Cᵥ eingeleitet. Ausgangsstellung ist die Abschlussstellung gemäß Fig.5. Als Folge der Absenkung des Vorsteuerdrucks C_{V} überwiegt das durch den Bremsdruckkolben 32 erzeugte Drehmoment auf den Wiegebalken 34. Dieser dreht sich folglich um die Schneide 20 des Verstellsteins 18 und ermöglicht es der Druckfeder 40, über den Ventilstößel 38 das Auslassventil V_{A} zu öffnen. Der Anschluss 96 für den Bremsdruck C und damit der Bremszylinder wird zur Atmosphäre 0 hin entlüftet, wie Fig.6 zeigt. Bei einer Lösestufe geht das Auslassventil V_{A} nach Abschluss der Absenkung des Vorsteuerdrucks C_{V} erneut in Abschlussstellung, sobald durch die Entlüftung des Bremszylinders der Bremsdruck C eine Höhe erreicht, die das Gleichgewicht an der Abwiegeeinrichtung 6 wiederherstellt. Zum vollständigen Lösen der Bremse wird der Vorsteuerdruck C_{V} maximal abgesenkt und dadurch der Bremszylinder vollständig entlüftet. Alle Funktionsteile befinden sich dann in der in Fig.2 gezeigten Stellung.

Die Erfindung in Form der progressiven Druckfeder 14 ist nicht auf ein Lastbremsventil mit kontinuierlicher Lastabbremsung, einem Vorsteuerdruck C_{V} und mit einer Ansprungeinrichtung beschränkt, sondern sie kann selbstverständlich auch in mehrstufigen Lastbremsventilen mit und ohne Ansprungeinrichtung sowie mit mehreren Vorsteuerdrücken C_{V} verwendet werden.

### Bezugszeichenliste

- 1: Lastbremsventil
- 2: Ansprungeinrichtung
- 4: Steuereinrichtung
- 6: Abwiegeeinrichtung
- 8: Zylinder
- 10: Steuerkolben
- 12: Steuerkolbenstange
- 14: Druckfeder
- 16: Stellmechanik
- 18: Verstellstein
- 20: Schneide
- 22: Steuerkammer
- 24: Strömungskanal
- 26: Anschluss
- 28: Anschlag
- 30: Vorsteuerdruckkolbensatz
- 32: Bremsdruckkolben
- 34: Wiegebalken
- 36: Druckstück
- 38: Ventilstößel
- 40: Druckfeder
- 42: Ventilteller
- 44: Druckfeder
- 46: Ausnehmung
- 48: erster Ventilsitz
- 50: zweiter Ventilsitz
- 52: Rand
- 54: Strömungskanal
- 56: Anschluss
- 58: Zylinder
- 60: Vorsteuerdruckkolben
- 62: Druckfeder
- 64: Anschlag
- 65: Anschlag
- 66: Vorsteuerdruckkolben
- 68: Membrane
- 70: Vorsteuerdruckraum
- 72: Anschluss
- 74: Vorsteuerdruckkolbenstange
- 76: Gelenk
- 78: Zylinder
- 82: Druckfeder
- 84: Anschlag
- 86: Bremsdruckkolbenstange
- 88: Gelenk
- 90: Membrane
- 92: Bremsdruckraum
- 94: Strömungskanal
- 96: Anschluss
- 98: Einstellschraube

## Patentansprüche

1. Lastbremsventil (1) zur Lastabbremsung eines Schienenfahrzeugs, mit einem ersten Kolben (32, 90) mit einer ersten Kolbenstange (86), auf den ein Bremsdruck (C) wirkt und einem oder mehreren zweiten Kolben (30, 68) mit einer zweiten Kolbenstange (74), auf die ein oder mehrere Vorsteuerdrücke (Cv) wirken, wobei die Kolbenstangen (30, 74) mit einem Wiegebalken (34) zusammenwirken, der ein Einlassventil (V_{E}) und ein Auslassventil (V_{A}) betätigt, wobei das Einlassventil (V_{E}) einen Druckluftvorrat (R) mit einem Bremszylinder verbindet oder diese Verbindung sperrt und das Auslassventil (V_{A}) den Bremszylinder mit der Atmosphäre (0) verbindet oder diese Verbindung sperrt und wobei der Wiegebalken (34) mit einer Abstützung (20) in Kontakt bringbar ist, deren Lage in Bezug zum Wiegebalken (34) durch einen dritten Kolben (10) veränderbar ist, wobei der dritte Kolben (10) einerseits durch einen lastabhängigen Druck (T) und andererseits durch die Federkraft einer Druckfeder (14) belastet ist, **dadurch gekennzeichnet, dass** die Federkennlinie der Druckfeder (14) derart progressiv ist, dass das Lastbremsventil eine lineare Kennlinie aufweist.

## Claims

1. Load brake valve (1) for load-braking a rail vehicle, comprising a first piston (32, 90) provided with a piston rod (86) onto which acts a braking pressure (C), and one or several second piston(s) (30, 68) provided with a second piston rod (74) onto which acts or act one or several pilot pressure(s) (Cv), with said piston rods (30, 74) interacting with a weighing beam (34) operating an inlet valve (V_{E}) and an outlet valve (V_{A}), wherein said inlet valve (V_{E}) communicates a compressed-air reservoir (R) with a brake cylinder or shuts off this communication, and wherein said outlet valve (V_{A}) communicates said brake cylinder with the atmosphere (0) or shuts off this communication, and wherein said weighing beam (34) is capable of being contacted with a support (20) whose position relative to said weighing beam (34) is variable by means of a third piston (10), with said third piston (10) being loaded by a load-dependent pressure (T), on the one hand, and by the elastic force of a compression spring, on the other hand, **characterized in that** the spring characteristic of said compression spring (14) is progressive in such a manner that the load brake valve presents a linear characteristic.

## Revendications

1. Soupape de freinage en fonction de la charge (1) pour le freinage à la charge d'un véhicule de chemin de fer, comprenant un premier piston (32, 90) pourvu d'une tige de piston (86), sur laquelle agit une pression de freinage (C), et un ou plusieurs deuxièmes de piston(s) (30, 68) pourvu(s) d'une deuxième tige de piston (74), sur laquelle agit ou agissent une ou plusieurs pression(s) pilote (Cv), auxdites tiges de piston (30, 74) coopérant avec un fléau de bascule (34) commandant une soupape d'entrée (V_{E}) et une soupape de sortie (V_{A}), dans lequel ladite soupape d'entrée (V_{E}) met un réservoir d'air comprimé (R) en communication avec un cylindre de frein ou coupe cette communication, et dans lequel ladite soupape de sortie (V_{A}) met ledit cylindre de frein en communication avec l'atmosphère (0) ou coupe cette communication, et dans lequel ledit fléau de bascule (34) est apte à être mis en contact avec un appui (20) dont la position relative audit fléau de bascule (34) est variable moyennant un troisième piston (10), audit troisième piston (10) étant chargé d'une pression (T) dépendant de la charge, et, d'autre côté, de la résilience d'un ressort de pression, **caractérisé en ce que** la courbe caractéristique de ressort dudit ressort de pression (14) est progressive d'une telle manière, que la soupape de freinage en fonction de la charge présente une courbe caractéristique linéaire.
